(19) Europäisches Patentamt European Patent Office Office européen des brevets

(11) **EP 4 546 135 A1**

(12) **EUROPEAN PATENT APPLICATION**
published in accordance with Art. 153(4) EPC

(43) Date of publication:
30.04.2025 Bulletin 2025/18

(21) Application number: 23853857.3

(22) Date of filing: 14.03.2023

(51) International Patent Classification (IPC):
*G06F 9/50* (2006.01)

(52) Cooperative Patent Classification (CPC):
G06F 9/50

(86) International application number:
PCT/CN2023/081285

(87) International publication number:
WO 2024/036940 (22.02.2024 Gazette 2024/08)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 16.08.2022 CN 202210983171
29.11.2022 CN 202211507530

(71) Applicant: Huawei Cloud Computing
Technologies Co., Ltd.
Guiyang, Guizhou 550025 (CN)

(72) Inventors:
• AI, Tuo
Guiyang, Guizhou 550025 (CN)
• WANG, Leibo
Guiyang, Guizhou 550025 (CN)
• SUN, Tao
Guiyang, Guizhou 550025 (CN)
• HUANG, Jian
Guiyang, Guizhou 550025 (CN)

(74) Representative: Pfenning, Meinig & Partner mbB
Patent- und Rechtsanwälte
Theresienhöhe 11a
80339 München (DE)

(54) **CONTAINER MANAGEMENT METHOD AND RELATED DEVICE**

(57) This application provides a container management method, performed by a container management system. The system is configured to manage a container set (pod) deployed in a service cluster or a pod to be deployed in the service cluster. The method includes: obtaining a life cycle of at least one node (configured to deploy the pod) in the service cluster and a life cycle of at least one pod; then, determining a target node based on the life cycle of the at least one node and the life cycle of the at least one pod, where the target node is a node on which the pod is to be deployed or a node from which the pod is to be deleted; and next, scaling, by the container management system, the pod on the target node. According to the method, the pod is scaled with reference to the life cycle of the node in the service cluster and the life cycle of the to-be-deployed pod or the deployed pod, so as to prevent separation between pod auto scaling and node auto scaling, thereby implementing on-demand use of node resources, and reducing service costs.

FIG. 8

**Description**

This application claims priorities to Chinese Patent Application No. 202210983171.5, filed with the China National Intellectual Property Administration on August 16, 2022 and entitled "CONTAINER MANAGEMENT METHOD AND RELATED SYSTEM", and to Chinese Patent Application No. 202211507530.6, filed with the China National Intellectual Property Administration on November 29, 2022 and entitled "CONTAINER MANAGEMENT METHOD AND RELATED DEVICE", both of which are incorporated herein by reference in their entireties.

**TECHNICAL FIELD**

This application relates to the field of cloud computing technologies, and in particular, to a container management method and system, a computing device cluster, a computer-readable storage medium, and a computer program product.

**BACKGROUND**

With continuous development of cloud computing, more developers start to use containers to develop and deploy applications. A container is an executable unit of software that encapsulates application code and its libraries and dependencies in a generic manner, and therefore can be run anytime and anywhere.

In consideration that some applications may include hundreds or even thousands of containers, a container orchestration platform may be used to manage containers throughout the lifecycle. For example, the container orchestration platform may perform image distribution, redundancy deployment, health monitoring, resource allocation, auto scaling, load balancing, and scheduling on the containers.

Generally, the container orchestration platform may classify a plurality of containers into "container sets", which are denoted as pods, then run workloads by using the pods as smallest schedulable units, and provide the pods with required services such as networking and storage. In consideration that workloads may change constantly, the container orchestration platform may adjust a quantity of pods in real time, so that the total quantity of pods is sufficient to support service pressure. Further, when adjusting the quantity of pods, the container orchestration platform may further adjust a quantity of nodes used to deploy the pods.

However, when the container orchestration platform adjusts the quantity of pods or the quantity of nodes (also referred to as auto scaling), it is difficult to implement on-demand use of node resources, resulting in high service costs.

**SUMMARY**

This application provides a container management method. In this method, a container set is scheduled on a node based on a life cycle of the container set and a life cycle of the node, so that node resources are used on demand, resource waste is prevented, and service costs are reduced. This application further provides a corresponding container management system, a computing device cluster, a computer-readable storage medium, and a computer program product.

According to a first aspect, this application provides a container management method. The method is performed by a container management system. The container management system may be a system configured to manage a container set (pod) deployed in a service cluster or a pod to be deployed in the service cluster. When the container management system is a software system, the container management system may be a plug-in, a component, or a module integrated into a container orchestration platform, or may be independent software. The software system may be deployed in a computing device cluster. The computing device cluster executes program code of the software system to perform the container management method in this application. When the container management system is a hardware system, for example, a computing device cluster with a container management function, the container management system may perform the container management method in this application when running.

Specifically, the container management system may obtain a life cycle of at least one node in the service cluster and a life cycle of at least one pod. The node is configured to deploy the pod. For example, the node may be a virtual machine (virtual machine, VM) node. Then, the container management system determines a target node based on the life cycle of the at least one node and the life cycle of the at least one pod. The target node is a node on which the pod is to be deployed or a node from which the pod is to be deleted. Next, the container management system scales the pod on the target node.

In this method, the container management system scales the pod with reference to the life cycle of the node in the service cluster and the life cycle of the to-be-deployed pod or the deployed pod. This prevents separation between pod auto scaling and node auto scaling, so that a cluster autoscaler (cluster autoscaler, CA) can implement on-demand use of node resources, and service costs are reduced.

In some possible implementations, the at least one pod includes the to-be-deployed pod. When determining a target node based on the life cycle of the node and the life cycle of the pod, the container management system may determine a degree of similarity between the life cycle of the to-be-deployed pod and the life cycle of the at least one node, and then determine the target node from the at least one node based on the degree of similarity. Correspondingly, the container management system may schedule the to-be-deployed pod to the target node.

In this method, the to-be-deployed pod is scheduled to the target node whose remaining life cycle is similar to the life cycle of the pod in length. Thus, when the pod is deleted (scaled in), another pod on the target node has also been deleted or is about to be deleted, and the target node may be released as soon as possible. This reduces resource waste, and reduces service costs.

In some possible implementations, the container management system provides a plurality of manners to determine a target node. Specifically, the container management system may sort the at least one node based on the degree of similarity, and determine the target node from the at least one node based on a sorting result. For example, the container management system may determine, as the target node based on the sorting result, a node whose life cycle is the most similar to that of the pod in length. The container management system may alternatively score the at least one node based on the degree of similarity, and determine the target node from the at least one node based on a score of the at least one node. For example, the container management system may determine a node with a highest score or a score greater than a preset score, as the target node.

The manner of determining a target node based on sorting is simpler and easier to implement, and has a lower requirement on computing power. The manner of determining a target node based on a score is more accurate, and a more proper target node can be determined. Scheduling the pod to the target node can reduce resource waste to a large extent, and reduce service costs.

In some possible implementations, the at least one node includes a first node, and the at least one pod includes a first pod. When a life cycle of the first pod is shorter than a life cycle of the first node, a score of the first node is positively correlated with a first degree of similarity, and the first degree of similarity is determined based on a ratio of the life cycle of the first pod to the life cycle of the first node. When a life cycle of the first pod is not shorter than a life cycle of the first node, a score of the first node is positively correlated with a second degree of similarity, and the second degree of similarity is determined based on a ratio of the life cycle of the first node to the life cycle of the first pod.

In this method, for a case in which a life cycle of a pod is shorter than a life cycle of a node and a case in which a life cycle of a pod is not shorter than a life cycle of a node, corresponding rules are used respectively to determine scores of the nodes, improving accuracy of the node scores, and laying a foundation for recommending a proper target node.

In some possible implementations, when determining a target node, the container management system may determine a candidate second node based on the life cycle of the at least one node and the life cycle of the container set on the at least one node, then determine at least one candidate deletion order of container sets on the candidate second nodes, and predict a benefit of deleting the container sets from the second nodes according to the candidate deletion order. The benefit may be determined based on resource utilization on the cluster. Then, the container management system determines a target deletion order, and determines a target node from the candidate second nodes based on the benefit. In this way, when scaling the pod, the container management system may adjust, according to the target deletion order, a position that is of a second container set on the target node and that is in the deletion order, and delete the second container set from the target node according to an adjusted position in the deletion order.

In this method, the container management system analyzes the global pod scale-in order intelligently, and optimizes the scale-in order, resolving a node resource fragmentation problem at its source. This improves resource utilization, and reduces service costs.

In some possible implementations, a life cycle of a candidate second node is longer than a first period, and a life cycle of a container set on the candidate second node is longer than a second period.

Thus, the candidate second node may be a long-period node, and the pod on the candidate second node is a long-period pod. For example, the long-period pod may remain on the candidate second node in a trough period. A life cycle of a long-period node is longer than the first period, and a life cycle of a long-period pod is longer than the second period. The first period and the second period may be set according to empirical values. In some examples, the first period and the second period may be set to be equal, or be set to be different. A long-period node and a long-period pod are usually not deleted in a trough period of a service. An elastic node and an elastic pod, in contrast to the long-period node and the long-period pod, may be deleted in a trough period of a service.

In this method, a long-period node is determined as a candidate node, so that a quantity of traversal times can be reduced during scale-in order optimization, and scale-in optimization efficiency can be improved.

In some possible implementations, the container management system supports periodic scale-in optimization or real-time scale-in optimization. Specifically, when adjusting the position that is of the second pod on the target node and that is in the deletion order, the container management system may periodically adjust the position of the second pod in the deletion order in a trough period of a service. Before the trough period of the service arrives, the container management system may alternatively adjust the position of the second pod in the deletion order according to a deletion order adjustment policy analyzed in real time.

Periodic scale-in optimization requires a smaller amount of computation, and can improve resource utilization at a lower cost. Real-time scale-in optimization requires real-time computation of the deletion order adjustment policy, so as to achieve a better optimization effect.

In some possible implementations, the container management system may obtain a survival period distribution of replicas in a replica set corresponding to the at least one pod in a historical time period, and then predict the life cycle of the at least one pod according to a statistical policy based on the survival period distribution of the replicas in the replica set corresponding to the at least one pod in the historical time period.

In this method, the life cycle of the pod is profiled based on the survival period distribution in the historical time period. This has high reliability, and provides a basis for life cycle-based scheduling.

In some possible implementations, the statistical policy includes one or more of machine learning, a quantile, a mean, a maximum value, or a probability distribution. In a specific implementation, the container management system may select, based on a service characteristic, a statistical policy corresponding to the service. In this way, the life cycle of the pod is predicted accurately, providing a reference for a life cycle-based scheduling policy.

In some possible implementations, the container management system determines the life cycle of the at least one node based on the life cycle of the pod on the at least one node and a creation time of the pod on the at least one node.

In this way, the life cycle of the node can be profiled, and this has high reliability, and provides a basis for life cycle-based scheduling.

In some possible implementations, the container management system is deployed in a scheduler. Container management capabilities, such as life cycle-based scheduling and scale-in order optimization, are provided by using the scheduler. This can reduce impact on other services and reduce intrusiveness.

In some possible implementations, the container management system may be deployed on different devices in a distributed manner, and different modules in the container management system interact by using an application programming interface API server. In this way, risks can be dispersed, and reliability of the entire container management system can be improved.

In some possible implementations, an order optimization module in the container management system may be an independent plug-in, or be obtained by modifying a kernel of the container orchestration platform. The independent plug-in has good compatibility, and may be applicable to different platforms to meet user requirements of different platforms. Modifying the kernel of the container orchestration platform to implement the order optimization module can simplify user operations and improve user experience.

According to a second aspect, this application provides a container management system. The container management system is configured to manage a container set deployed in a service cluster or a container set to be deployed in the service cluster, the container set includes a set of containers, and the system includes:

a life cycle profiling module, configured to obtain a life cycle of at least one node in the service cluster and a life cycle of at least one container set, where the node is configured to deploy the container set; and
a life cycle scheduling module, configured to determine a target node based on the life cycle of the at least one node and the life cycle of the at least one container set, where the target node is a node on which the container set is to be deployed or a node from which the container set is to be deleted; and
the life cycle scheduling module is further configured to scale the container set on the target node.

In some possible implementations, the at least one container set includes the to-be-deployed container set, and the life cycle scheduling module is specifically configured to:

determine a degree of similarity between the life cycle of the to-be-deployed container set and the life cycle of the at least one node; and
determine the target node from the at least one node based on the degree of similarity; and
the life cycle scheduling module is specifically configured to:
schedule the to-be-deployed container set to the target node.

In some possible implementations, the life cycle scheduling module is specifically configured to:

sort the at least one node based on the degree of similarity, and determine the target node from the at least one node based on a sorting result; or
score the at least one node based on the degree of similarity, and determine the target node from the at least one node based on a score of the at least one node.

In some possible implementations, the at least one node includes a first node, and the at least one container set includes a first container set; and

when a life cycle of the first container set is shorter than a life cycle of the first node, a score of the first node is positively correlated with a first degree of similarity, and the first degree of similarity is determined based on a ratio of the life cycle of the first container set to the life cycle of the first node; or

when a life cycle of the first container set is not shorter than a life cycle of the first node, a score of the first node is positively correlated with a second degree of similarity, and the second degree of similarity is determined based on a ratio of the life cycle of the first node to the life cycle of the first container set.

In some possible implementations, the system further includes:

an order optimization module, configured to: determine a candidate second node based on the life cycle of the at least one node and the life cycle of the container set on the at least one node; determine at least one candidate deletion order of container sets on the candidate second nodes, and predict a benefit of deleting the container sets from the second nodes according to the candidate deletion order, where the benefit is determined based on resource utilization on the cluster; and determine a target deletion order based on the benefit;
the life cycle scheduling module is specifically configured to:

determine a target node from the candidate second nodes based on the benefit; and
the life cycle scheduling module is specifically configured to:
adjust, according to the target deletion order, a position that is of a second container set on the target node and that is in the deletion order, and delete the second container set from the target node according to an adjusted position in the deletion order.

In some possible implementations, the life cycle scheduling module is specifically configured to:

periodically adjust the position of the second container set in the deletion order in a trough period of a service; or
before the trough period of the service arrives, adjust the position of the second container set in the deletion order according to a deletion order adjustment policy analyzed in real time.

In some possible implementations, the life cycle profiling module is specifically configured to:

obtain a survival period distribution of replicas in a replica set corresponding to the at least one container set in a historical time period; and
predict the life cycle of the at least one container set according to a statistical policy based on the survival period distribution of the replicas in the replica set corresponding to the at least one container set in the historical time period.

In some possible implementations, the life cycle profiling module is specifically configured to:
determine the life cycle of the at least one node based on the life cycle of the container set on the at least one node and a creation time of the container set on the at least one node.

In some possible implementations, the container management system is deployed in a scheduler.

In some possible implementations, the container management system is deployed on different devices in a distributed manner, and different modules in the container management system interact by using an application programming interface API server.

In some possible implementations, the order optimization module in the container management system is an independent plug-in, or is obtained by modifying a kernel of a container orchestration platform.

According to a third aspect, this application provides a computing device cluster. The computing device cluster includes at least one computing device, and the at least one computing device includes at least one processor and at least one memory. The at least one processor and the at least one memory communicate with each other. The at least one processor is configured to execute instructions stored in the at least one memory, to enable the computing device or the computing device cluster to perform the container management method according to any one of the first aspect or the implementations of the first aspect.

According to a fourth aspect, this application provides a computer-readable storage medium. The computer-readable storage medium stores instructions, and the instructions instruct a computing device or a computing device cluster to perform the container management method according to any one of the first aspect or the implementations of the first aspect.

According to a fifth aspect, this application provides a computer program product including instructions. When the computer program product runs on a computing device or a computing device cluster, the computing device or the computing device cluster is enabled to perform the container management method according to any one of the first aspect or the implementations of the first aspect.

Based on the implementations provided in the foregoing aspects, this application may further combine technologies in this application to provide more implementations.

BRIEF DESCRIPTION OF DRAWINGS

To describe technical methods in embodiments of this application more clearly, the following briefly describes accompanying drawings that need to be used in embodiments.

FIG. 1 is a diagram of controlling a quantity of pods by a horizontal pod autoscaler according to an embodiment of this application;
FIG. 2 is a diagram of pod auto scaling and node auto scaling according to an embodiment of this application;
FIG. 3 is a diagram of performing pod scheduling based on a bin-packing scheduling policy according to an embodiment of this application;
FIG. 4 is a diagram of performing scale-in based on a scale-in policy according to an embodiment of this application;
FIG. 5 is a diagram of performing pod scheduling based on a life cycle according to an embodiment of this application;
FIG. 6 is a diagram of performing pod scheduling based on a life cycle according to an embodiment of this application;
FIG. 7 is a diagram of performing scale-in based on a life cycle according to an embodiment of this application;
FIG. 8 is a diagram of a system architecture of a container management system according to an embodiment of this application;
FIG. 9 is a diagram of a structure of a scheduler-based container management system according to an embodiment of this application;
FIG. 10 is a diagram of a structure of a plug-in-based container management system according to an embodiment of this application;
FIG. 11 is a diagram of a structure of a kernel-based container management system according to an embodiment of this application;
FIG. 12 is a flowchart of a container management method according to an embodiment of this application;
FIG. 13 is a diagram of statistical analysis of survival periods of pods in a replica set according to an embodiment of this application;
FIG. 14 is a diagram of tracking pod replicas by using a stack according to an embodiment of this application;
FIG. 15 is a diagram of a distribution of life lengths of pod replicas according to an embodiment of this application;
FIG. 16 is a diagram of periodically optimizing a scale-in order according to an embodiment of this application;
FIG. 17 is a diagram of optimizing a scale-in order in real time according to an embodiment of this application;
FIG. 18 is a diagram of a structure of a computing device according to an embodiment of this application;
FIG. 19 is a diagram of a structure of a computing device cluster according to an embodiment of this application;
FIG. 20 is a diagram of a structure of a computing device cluster according to an embodiment of this application; and
FIG. 21 is a diagram of a structure of a computing device cluster according to an embodiment of this application.

## DESCRIPTION OF EMBODIMENTS

Terms "first" and "second" in embodiments of this application are merely intended for a purpose of description, and shall not be understood as an indication or implication of relative importance or an implicit indication of a quantity of indicated technical features. Therefore, a feature defined with "first" or "second" may explicitly or implicitly indicate that one or more such features are included.
First, some technical terms used in embodiments of this application are described.
Node (node): a minimum computing hardware unit. Typically, a node may be a separate computer (also referred to as a computing device). The computer may be a physical host, for example, a server or a terminal. The server may be a cloud server, an edge server, or an on-premises server. A cloud server is a server in a cloud environment, for example, a central server in a central computing cluster. An edge server is a server in an edge environment, for example, an edge server in an edge computing cluster. An on-premises server is a server in an on-premises data center. The terminal includes but is not limited to a desktop computer, a notebook computer, or a smartphone. Further, the computer may alternatively be a virtual host that is on a physical host and that is obtained through virtualization by using a virtualization service. The virtual host is also referred to as a virtual machine (virtual machine, VM).
Cluster (cluster): a set of nodes. Nodes in a cluster usually work collaboratively, and therefore a cluster may be considered as a single system. Nodes in a cluster may be set to execute a same task, and be controlled and scheduled by software, thereby improving availability and scalability. In this application, nodes in a cluster may provide a same service. Therefore, a cluster may also be referred to as a service cluster.
Container (container): a set of one or more processes (process) (including all files required for running). A container is portable between computers. A process is a program (computer program) that is being executed on a computer.

Container set (pod): a set of containers that share a same computing resource. A set of containers that share a same computing resource may include one or more containers, and a computing resource may include a processor, for example, a central processing unit (central processing unit, CPU). Computing resources of different container sets are aggregated to form several service clusters. These service clusters may provide more powerful and more intelligent distributed systems, which are configured to execute corresponding applications.

Container orchestration is automated deployment, management, scaling, and networking of containers. Container orchestration may usually be implemented by a container orchestration platform. A container orchestration platform is also referred to as a container orchestration tool, and is configured to manage a large quantity of containers throughout a life cycle, including image distribution, redundancy deployment, health monitoring, resource allocation, auto scaling, load balancing, and scheduling. A container orchestration platform includes but is not limited to Apache Mesos, Nomad, Docker Swarm, or Kubernetes (referred to as K8s for short). For ease of description, the following uses Kubernetes as an example for description.

The container orchestration platform generally uses pods as smallest schedulable units to run workloads, and provides the pods with required services such as networking and storage. A load balancing function of the container orchestration platform may implement load balancing among the pods. An auto scaling function of the container orchestration platform may enable a quantity of pods to meet a service requirement.

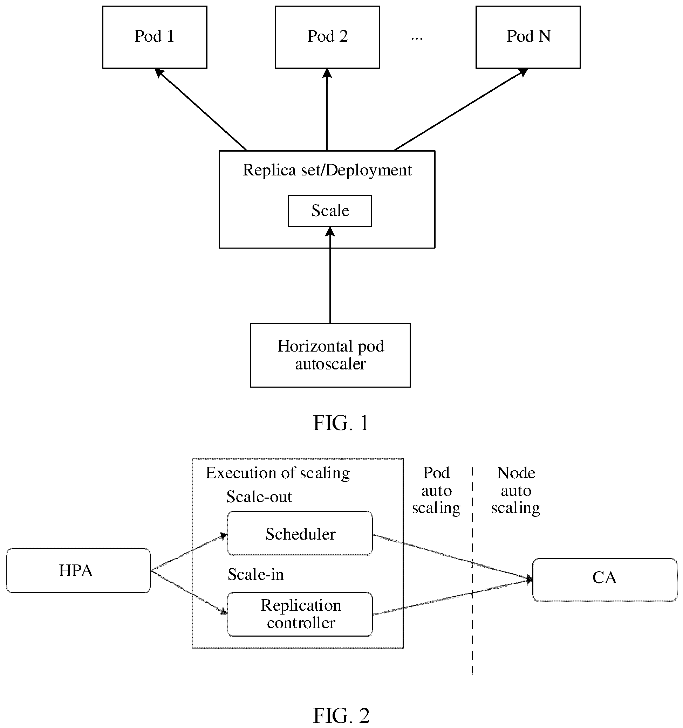

Specifically, the container orchestration platform may adjust the quantity of pods by using a horizontal pod autoscaler. As shown in FIG. 1, an HPA may create a replica set (replica set) object or a deployment (deployment) object. The replica set object or the deployment object may be considered as a replication controller (replication controller, RC). A replication controller is configured to maintain a set of replicas (instances) with a stable quantity for a specified pod. For example, a quantity of pods is set to N in a deploy object, where N is a positive integer. In this case, when the quantity of pods is greater than N, deleting an excess pod may be indicated; when the quantity of pods is less than N, creating a new pod may be indicated.

The HPA may adjust the replica set object or the deployment object, to deploy more pods or remove deployed pods, so as to match an observed metric, such as average CPU utilization, average memory utilization, or another custom metric. Specifically, the HPA may calculate an expected quantity of replicas based on a current metric and an expected metric, as shown in the following:

$$\text{Expected quantity of replicas} = \text{Current quantity of replicas} \times (\text{Current metric}/ \text{Expected metric}) \qquad (1)$$

The average CPU utilization is used as an example of a metric for description. In this example, if current average CPU utilization is 20% and expected average CPU utilization is 10%, an expected quantity of replicas is doubled on a basis of a current quantity of replicas; if current average CPU utilization is 5%, an expected quantity of replicas is halved on a basis of a current quantity of replicas.

The HPA is mainly configured to implement pod-level (instance-level) auto scaling. The container orchestration platform may further perform node-level auto scaling by using a cluster autoscaler (cluster autoscaler, CA). Auto scaling includes auto scale-out and auto scale-in. Scale-out means adding a pod or adding a node. Scale-in means deleting (removing) a pod or deleting a node. When a capacity of a service cluster is insufficient, the CA may create a new node. When resource utilization of a node in a service cluster is low for a long time (for example, 10 minutes), the node may be deleted to reduce costs.

Currently, the HPA and the CA in the container orchestration platform are usually used together. The HPA observes resource utilization of the replica set object or the deployment object. When the resource utilization is excessively high, the HPA creates a pod to cope with pressure of high loads. With an increase in a quantity of pods, when node resources are insufficient for pod scheduling, the CA triggers cluster scale-out to add a node. On the contrary, when the HPA finds that the resource utilization of the replica set object or the deployment object is excessively low, the HPA removes a pod to reduce resource consumption. As a quantity of pods decreases, node resource utilization decreases accordingly. When the node resource utilization is lower than a scale-in threshold, the CA may trigger cluster scale-in to delete a node, so as to reduce resources.

Further, for a service that may be disrupted and a service that cannot be disrupted, the CA may adopt different scale-in policies. Specifically, for a service that may be disrupted, for example, an information query system or another web service, when resource utilization of a node is lower than a scale-in threshold, the CA may disrupt a remaining pod on the node, release the node, and reschedule the disrupted pod. For a service that cannot be disrupted, for example, a transcoding service in a live streaming scenario, the CA may provide the following configuration parameter: pod disruption budget (pod disruption budget, PDB), to ensure that a quantity of working or active pods in a service cluster is not less than the PDB. If releasing a node causes the quantity of active pods in the service cluster to be less than the PDB, the node is not released.

A purpose of the CA is to dynamically adjust a scale of a service cluster accordingly along with the HPA as a service shifts between peaks and troughs, so as to implement on-demand use of node resources. However, pod auto scaling by the HPA and node auto scaling by the CA are usually separated.

Refer to a diagram of pod auto scaling and node auto scaling shown in FIG. 2. The HPA may calculate an expected quantity of replicas of a pod, and send a corresponding scaling instruction to a corresponding execution unit. If the expected quantity of replicas of the pod is greater than a current quantity of replicas, it indicates that scale-out needs to be performed. An execution unit corresponding to scale-out may be a scheduler (scheduler), for example, a volcano scheduler. The scheduler may use, in response to a scaling instruction, a scheduling algorithm to select a node for pod scheduling. If the expected quantity of replicas of the pod is less than a current quantity of replicas, it indicates that scale-in needs to be performed. An execution unit corresponding to scale-in may be a deployment controller, for example, a K8s controller. A replication controller may use, in response to a scaling instruction, a scale-in policy to select a pod for releasing. The CA performs node auto scaling based on node resource utilization.

When the HPA performs pod auto scaling, node auto scaling is not considered. As a result, it is difficult for the CA to implement on-demand use of node resources.

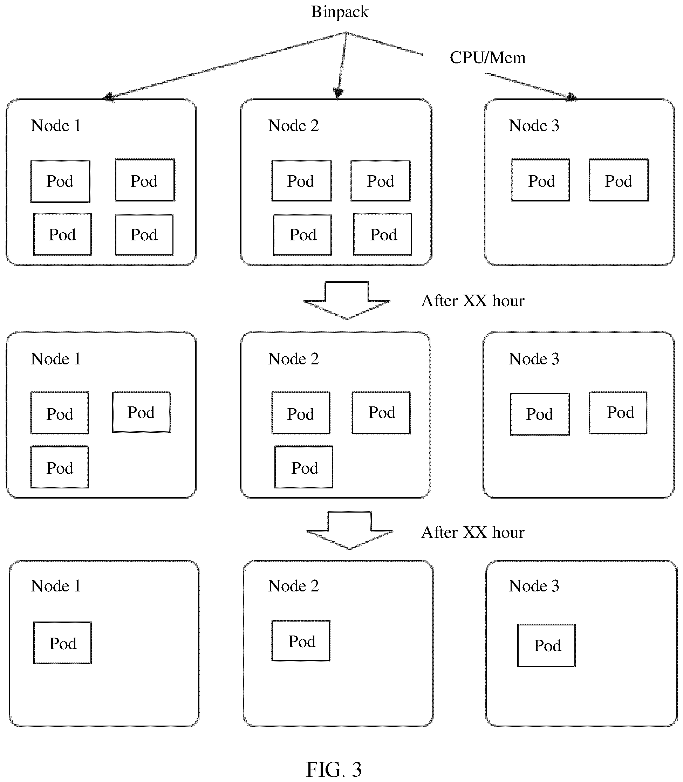

As shown in FIG. 3, after the HPA delivers a scaling instruction to the scheduler, the scheduler performs pod scheduling by using a bin-packing scheduling policy. An objective of the bin-packing scheduling policy is to accommodate more pods with fewer nodes. The bin-packing scheduling policy is usually an optimal solution for resources at a single moment (a scheduling moment), but the bin-packing scheduling policy is not globally optimal in a time series dimension. A reason of this is as follows: A quantity of replicas of a pod may vary with peaks and troughs of a service. Pods have different life cycles. Because the scheduler usually performs bin packing based on two dimensions of a CPU and a memory without considering the life cycles of the pods, the pods with the different life cycles are evenly distributed across nodes. As time goes by, pods with smaller life lengths are released one after another. Finally, pods that survive for a long time are distributed across the nodes in a trough period of the service. For a service that cannot be disrupted, it is difficult to perform scale-in although node resource utilization is low. For a service that may be disrupted, a large quantity of pods may be disrupted during scale-in.

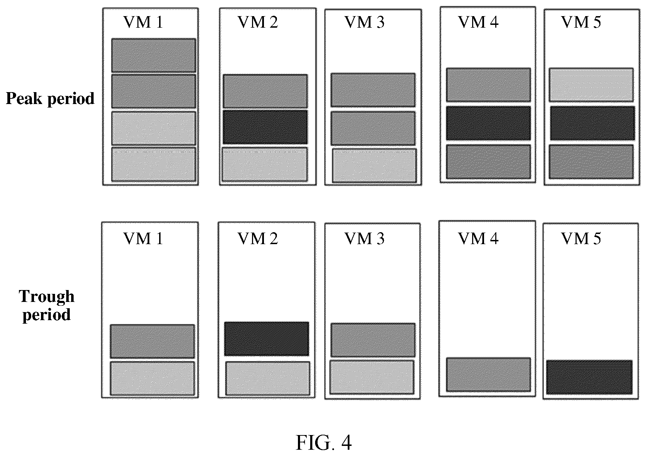

As shown in FIG. 4, for a scale-in policy, a life cycle distribution of pods on nodes is not taken into consideration, either. As a service shifts from a peak period to a trough period, a quantity of replicas of pods controlled by the HPA decreases. In the current scale-in policy, quantities of the pods on the nodes decrease evenly. Finally, the same problem is presented. To be specific, for a service that cannot be disrupted, it is difficult to perform scale-in although node resource utilization is low; for a service that may be disrupted, a large quantity of pods may be disrupted during scale-in.

In view of this, this application provides a container management method. The method may be performed by a container management system. The container management system may be a system integrated into a container orchestration platform. The container management system is configured to manage a pod deployed in a service cluster or a pod to be deployed in the service cluster. The container management system may be a software system. A computing device cluster executes program code of the software system to perform the container management method in this application. The container management system may alternatively be a hardware system. The hardware system performs the container management method in this application when running. For ease of description, an example in which the container management system is a software system is used for description in the following.

Specifically, the container management system may obtain a life cycle of at least one node in the service cluster and a life cycle of at least one pod, where the at least one pod may be the pod to be deployed or the pod deployed on the at least one node. Then, the container management system may determine a target node based on the life cycle of the at least one node and the life cycle of the at least one pod, where the target node may be a node on which the pod is to be deployed, or a node from which the pod is to be deleted. Next, the container management system may scale the pod on the target node.

In this method, the container management system scales the pod with reference to the life cycle of the node in the service cluster and the life cycle of the to-be-deployed pod or the deployed pod. This prevents separation between pod auto scaling and node auto scaling, so that the CA can implement on-demand use of node resources, and service costs are reduced.

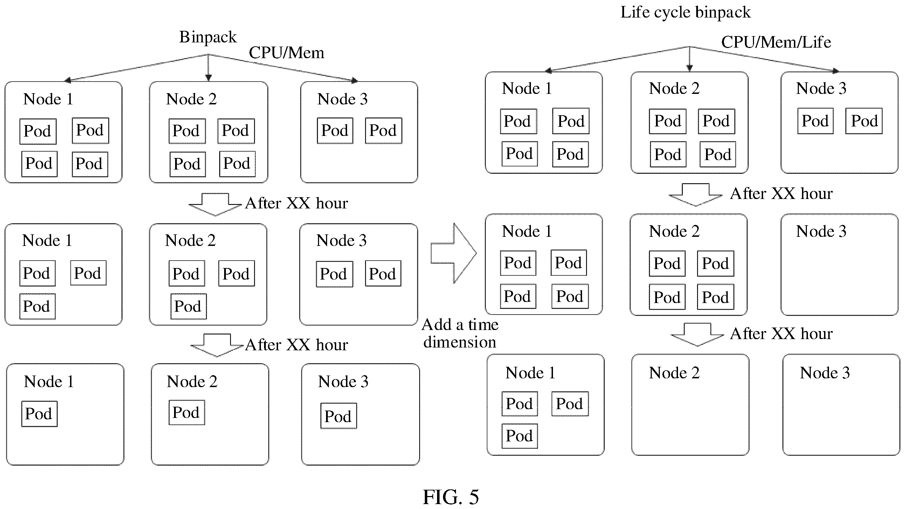

The life cycle of the node and the life cycle of the pod may be predicted through profiling. As shown in FIG. 5, a time dimension may be added, based on utilization of resources such as a CPU and a memory, to the container management system for pod scheduling. Specifically, the container management system may determine a target node for a to-be-deployed pod with reference to a life cycle of a node and a life cycle of the to-be-deployed pod, and then schedule the to-be-deployed pod to the target node. For ease of description, the foregoing scheduling policy is referred to as a life cycle-based scheduling policy in this application. The life cycle-based scheduling policy may schedule pods with similar lengths of life cycles to a same node. When a trough period of a service arrives, for example, after xx hours, the pods on the same node may be deleted first. After all the pods on the same node are deleted, the node may be released. In this way, resource waste is reduced, and service costs are reduced.

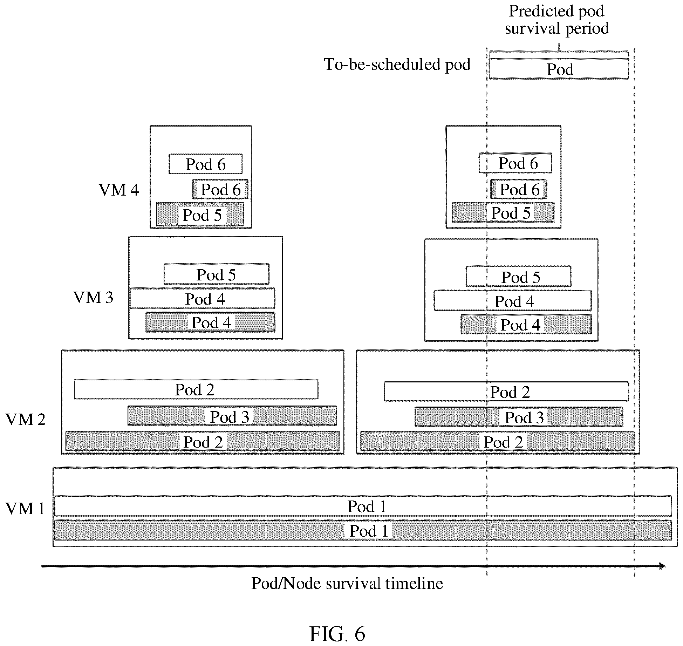

Further, when a peak period of the service arrives, the container management system may obtain a to-be-deployed pod according to a scaling instruction, then determine a target node based on a life cycle of the to-be-deployed pod and a life cycle of a node (for example, a remaining life cycle of a VM), and then schedule the to-be-deployed pod to the target node whose life cycle is similar to that of the to-be-deployed pod in length. In an example in FIG. 6, a target node may be a VM 2, and the container management system may schedule a to-be-deployed pod to the VM 2.

A prerequisite for implementing the life cycle-based scheduling policy is that a deletion order of pods, which is also referred to as a scale-in order, is determined when the pods are scheduled. In this application, a scale-in order is set to be reversed from a scale-out order by default. A pod that is scaled out later is released preferentially. In this way, a life cycle of each pod, and specifically, a life length of each pod, may be determined according to a profile in a scheduling period.

However, in an initial phase of service deployment, a profile is not accurate due to a lack of data. A transitional policy is further designed in this application. Based on the default scale-in order in this application, it may be shown that a pod scaled out in an early phase has a longer survival period. When a quantity of pod replicas increases and a peak period of the service is drawing near, a pod has a shorter survival period. Based on this feature, the transitional policy in this application may be as follows: Based on a pod scale-out order, several phases are obtained through division. Pods in each phase are preferentially scheduled to a same node.

Pods are scheduled to an inappropriate node (for example, long-period pods are scheduled to a short-period node) due to a factor such as an inaccurate life cycle profile or an inaccurate transitional policy. That the pods are scheduled to the inappropriate node may cause a few long-period pods to remain on the node, so that the node cannot be released. Therefore, in a scale-in process, the container management system may further dynamically adjust a scale-in order, and increase priorities of the pods scheduled to the inappropriate node, so that the pods can be preferentially deleted or released.

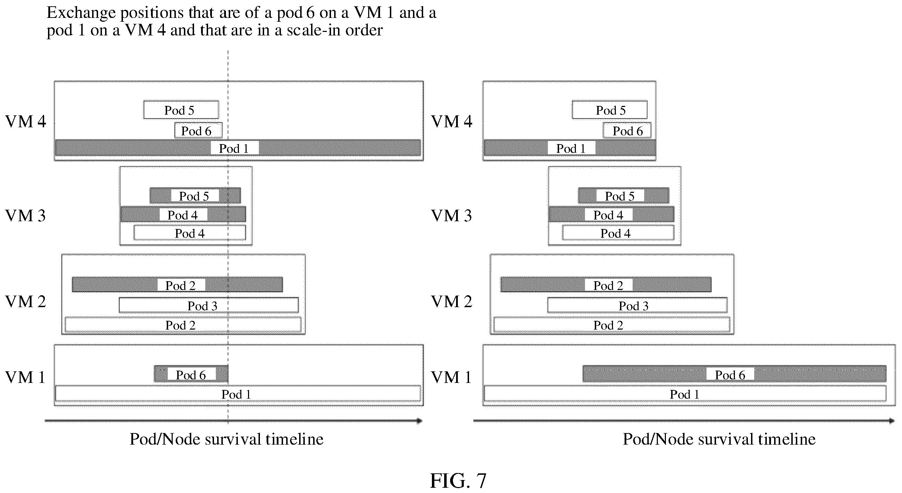

FIG. 7 further provides an example for description. In this example, a service cluster includes four VM nodes. There is a time axis in a horizontal direction. A horizontal length of a pod represents a survival period of the node, that is, a life cycle. A diagram on the left in FIG. 7 shows that a pod 1 (shown by a dark gray rectangular block), a replica of a specified pod, is incorrectly scheduled to a VM 4. As a result, the VM 4 and a VM 1 have low resource utilization, and cannot be released. The container management system may dynamically optimize a scale-in order. Specifically, before a pod 6 (shown by a dark gray rectangular block in the VM 1), another replica of the specified pod, is scaled in, positions of the pod 1 and a pod in the scale-in order are exchanged, and the pod 1 is scaled in preferentially. Thus, after pods on the VM 4 are all scaled in, the VM 4 may be released by the CA. A diagram on the right in FIG. 7 shows resource use information after the positions in the scale-in order are exchanged. Compared with the diagram on the left, in the diagram on the right, a large quantity of resources are reduced, and service costs are reduced.

To make the technical solutions of this application clearer and easier to understand, the following describes a system architecture of a container management system in the embodiments of this application.

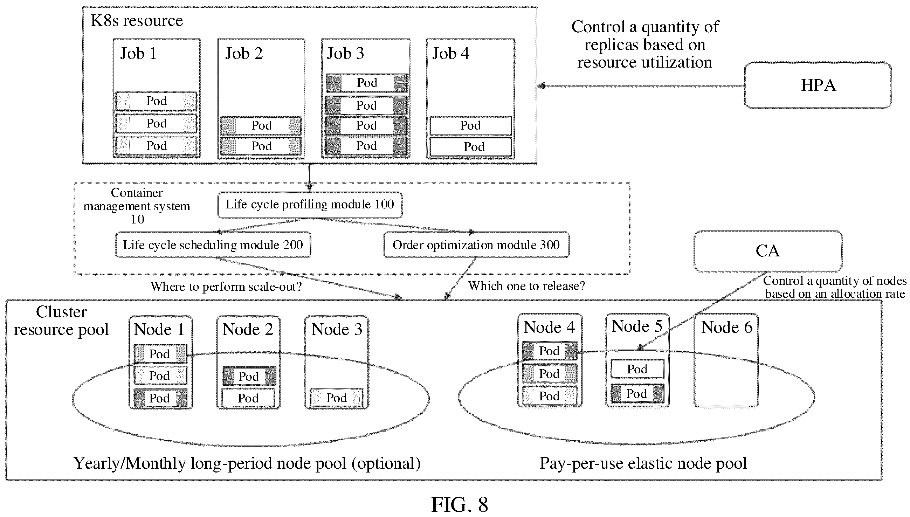

Refer to a diagram of a system architecture of a container management system shown in FIG. 8. The container management system 10 includes a life cycle profiling module 100, a life cycle scheduling module 200, and an order optimization module 300. The life cycle scheduling module 200 and the order optimization module 300 are optional modules. For example, the container management system 10 may include the life cycle profiling module 100 and the life cycle scheduling module 200. For another example, the container management system 10 may include the life cycle profiling module 100 and the order optimization module 300.

Specifically, an HPA may determine an expected quantity of pod replicas based on resource utilization of a replica set object or a deployment object. For example, in an example in FIG. 8, an expected quantity of pod replicas corresponding to a job 1 may be 3, an expected quantity of replicas corresponding to a job 2 may be 2, an expected quantity of replicas corresponding to a job 3 may be 4, and an expected quantity of replicas corresponding to a job 4 may be 2. Correspondingly, the HPA may modify a replica set object, a deployment object, or another workload resource, for example, a K8s resource. The container management system 10 may scale a pod based on a life cycle in response to a workload resource change.

For example, when an expected quantity of replicas is greater than a current quantity of replicas, it indicates that a pod needs to be added. The life cycle profiling module 100 is configured to profile a node and a to-be-deployed pod, to obtain a life cycle of the node and a life cycle of the to-be-deployed pod. Then, the life cycle scheduling module 200 is configured to determine a target node based on the life cycle of the node and the life cycle of the to-be-deployed pod, for example, determine a target node from a cluster resource pool; and then schedule the to-be-deployed pod to the target node. The cluster resource pool may include one or more of a period node pool or a pay-per-use node pool. A period node pool may be a yearly or monthly long-period node pool.

For another example, when an expected quantity of replicas is less than a current quantity of replicas, it indicates that a pod needs to be deleted. The life cycle profiling module 100 is configured to profile a node and a deployed pod, to obtain a life cycle of the node and a life cycle of the deployed pod. Then, the order optimization module 300 may determine a target node based on the life cycle of the node and the life cycle of the deployed pod, then adjust a position that is of the deployed pod on the target node and that is in a scale-in order (that is, a deletion order), and delete the deployed pod from the target node according to an adjusted position in the scale-in order. When all pods deployed on the target node are deleted, a CA may further release the target node, so as to control a quantity of nodes.

Modules of a container orchestration platform may interact by using an interface server. For example, modules of Kubernetes may interact by using a kube-apiserver. The container orchestration platform may provide a plurality of native pod orchestration and management methods, including a deployment, a replica set, and a statefulset. A controller corresponding to the deployment, the replica set, or the statefulset executes control logic by interacting with the kube-apiserver. The controller further provides an external interface. A scale-in order may be controlled from outside by using the kube-apiserver. A scheduler perceives a pod change at a service layer by using the kube-apiserver, and binds a pod to a corresponding node.

It should be noted that the container orchestration platform may further provide a custom scaling capability (Custom Resource Define, CRD) based on a personalized orchestration requirement. CRD allows a developer to customize a resource, to improve scalability.

The container management system 10 in this application may include a plurality of product forms. For example, the container management system 10 may be a scheduler-based product form. For another example, the container management system 10 may alternatively be a product form based on a plug-in of a container orchestration platform, for example, a plug-in of Kubernetes. For still another example, the container management system 10 may be a product form based on a modification of a kernel, and specifically, a product form based on a modification of a Kubernetes kernel. The following describes the product forms with reference to accompanying drawings.

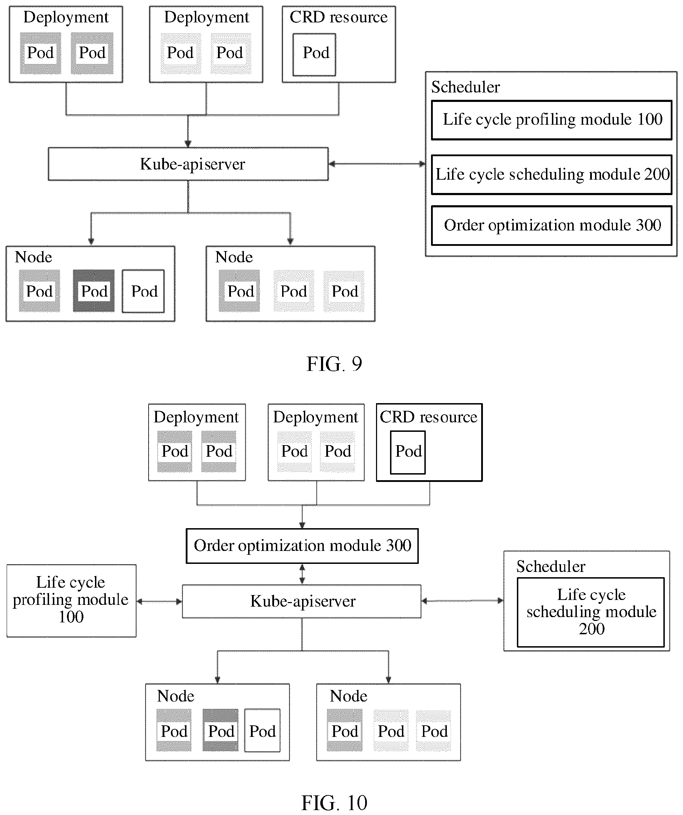

First, refer to a diagram of a structure of a scheduler-based container management system 10 shown in FIG. 9. As shown in FIG. 9, a life cycle profiling module 100, a life cycle scheduling module 200, and an order optimization module 300 of the container management system 10 are all implemented in a scheduler. The life cycle profiling module 100 may perceive an upper-layer service change by using an apiserver, so as to profile a life cycle. The life cycle scheduling module 200 is executed by using the scheduler. The order optimization module 300 may adjust a pod scale-in order by using the apiserver.

In this architecture, the container management system 10 further supports management of a pod in CRD resources developed by a user (for example, a developer). For example, the container management system 10 may perform interface adaptation for the CRD resources. A form of the interface may be the same as that of a native interface, or a uniformly custom delivery interface may be used. In this way, the container management system 10 may manage the pod in the CRD resources and a pod in native resources, for example, deployment resources, in a uniform manner. For example, scheduling is uniformly performed based on a life cycle, or scale-in is uniformly performed in a scale-in order adjusted based on a life cycle.

Then, refer to a diagram of a structure of a plug-in-based container management system 10 shown in FIG. 10. Unlike the container management system 10 in FIG. 9, modules of the container management system 10 in FIG. 10 are deployed separately, and interact by using an apiserver. A life cycle scheduling module 200 relies on a scheduler for execution, and a life cycle profiling module 100 and an order optimization module 300 are independent plug-ins.

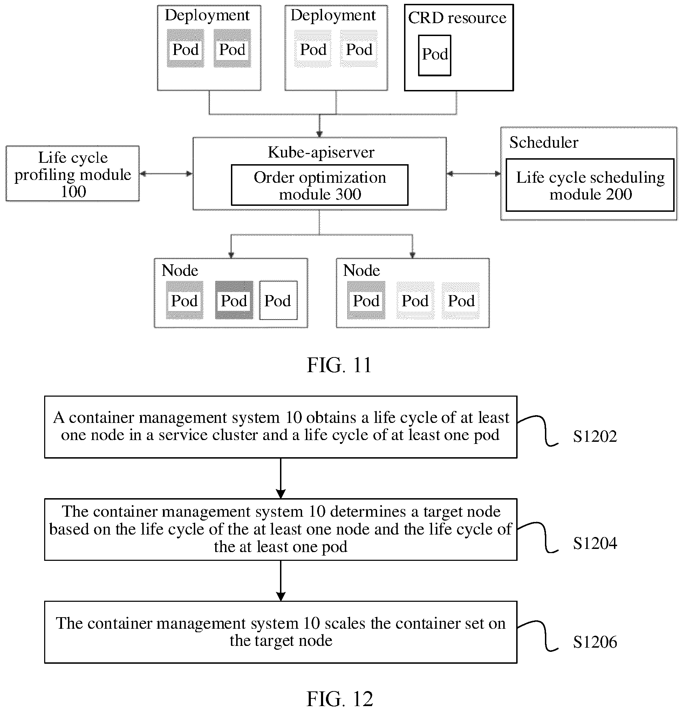

Next, refer to a diagram of a structure of a kernel-based container management system 10 shown in FIG. 11. Unlike the container management system 10 shown in FIG. 10, an order optimization module 300 is implemented in a Kubernetes kernel, for example, in a Kubernetes apiserver. Based on this, for both a native resource, for example, a deployment resource, and a custom CRD resource, a scale-in instruction for scale-in among scaling instructions may be intercepted. After the order optimization module 300 optimizes a scale-in order, a post-optimization scale-in instruction is delivered, so that a corresponding controller may execute the post-optimization scale-in instruction.

The container management system 10 is described in detail above. The following describes a container management method in the embodiments of this application in detail from a perspective of the container management system 10.

Refer to a flowchart of the container management method shown in FIG. 12. The method includes the following steps.

S1202: The container management system 10 obtains a life cycle of at least one node in a service cluster and a life cycle of at least one pod.

The at least one pod may be a to-be-deployed pod or a deployed pod. For example, when an HPA indicates to add a pod (that is, pod-level scale-out), the at least one pod may be a to-be-deployed pod, and the to-be-deployed pod may be created by using a pod template defined in a deployment object or a replica set object. For another example, when an HPA indicates to delete a pod (that is, pod-level scale-in), the at least one pod may be a deployed pod.

Specifically, the container management system 10 may obtain the life cycle of the at least one node in the service cluster and the life cycle of the at least one pod through life cycle profiling. The following separately describes pod life cycle profiling and node life cycle profiling.

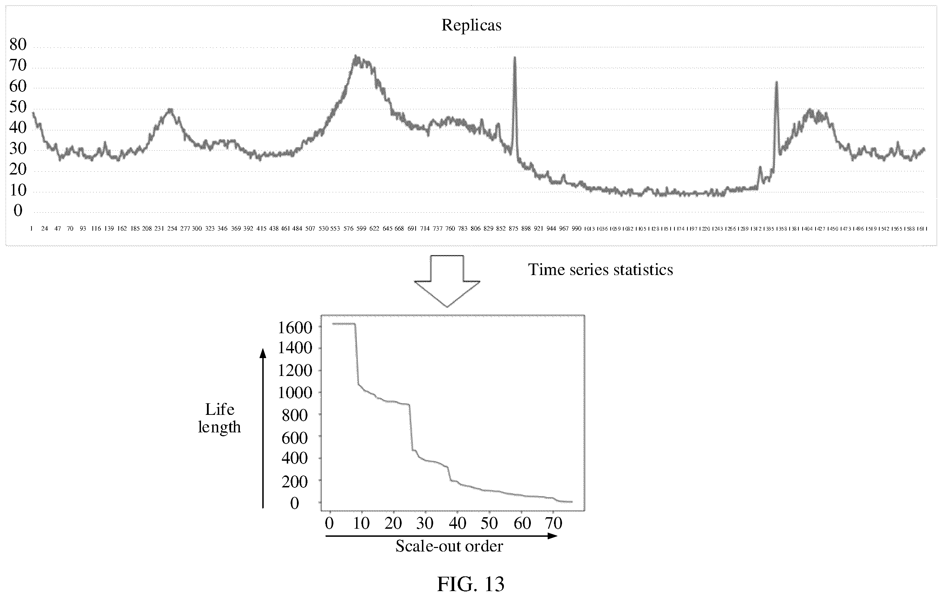

Refer to a diagram of statistical analysis of survival periods of pods in a replica set shown in FIG. 13. The container management system 10 may obtain a survival period distribution of replicas in a replica set corresponding to the at least one pod in a historical time period. As shown in an upper diagram in FIG. 13, a horizontal axis of the survival period distribution represents time; and a vertical axis represents a quantity of replicas, indicating a quantity of pod replicas that are working or are active at a corresponding moment. As shown in a lower diagram in FIG. 13, the container management system 10 may further perform conversion based on the survival period distribution, to determine how a life length varies according to a position in a scale-out order. It can be learned from the lower diagram in FIG. 13 that if a position that is of a replica in the replica set and that is in the scale-out order is closer to a peak, a life length of the pod is smaller; and if a position of a replica in the scale-out order is closer to a trough, a life length of the pod is greater. The container management system 10 may predict the life cycle of the at least one pod according to a statistical policy. The statistical policy includes but is not limited to one or more of machine learning, a quantile, a mean, a maximum value, or a probability distribution.

The container management system 10 may use a stack to track a life cycle of each pod replica. For ease of understanding, the following uses a specific example for description.

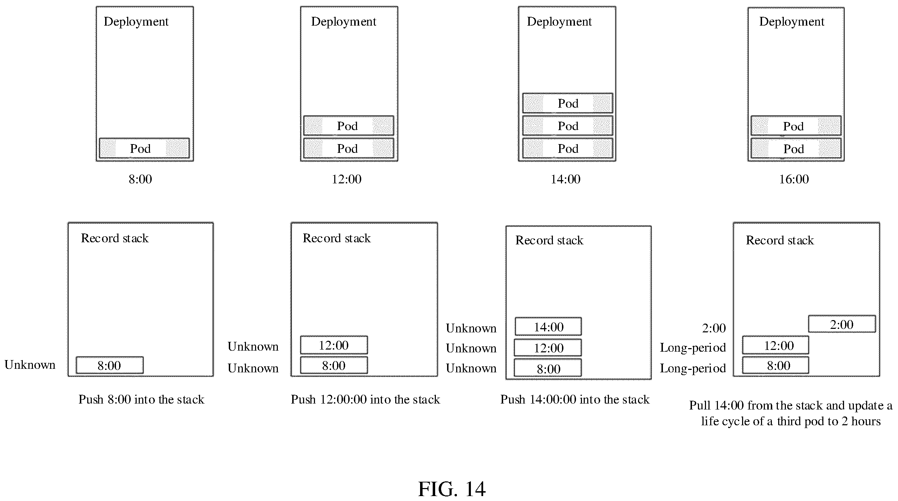

Refer to a diagram of using a stack to track pod replicas shown in FIG. 14. As shown in FIG. 14, the stack may record a life cycle change rule of each pod replica, for example, each deployment pod. Specifically, in the example in FIG. 14, at a moment 8:00, a quantity of pods in a deployment is one, and the time of 8:00 may be pushed into the stack; at a moment 12:00, one pod is added to the deployment, and 12:00 continues to be pushed into the stack; at a moment 14:00, one pod is added to the deployment, and 14:00 continues to be pushed into the stack; at a moment 16:00, workloads decrease, and one pod is deleted from the deployment, for example, 14:00 at the top of the stack is pulled from the stack. The container management system 10 may plot a survival period distribution based on the foregoing records.

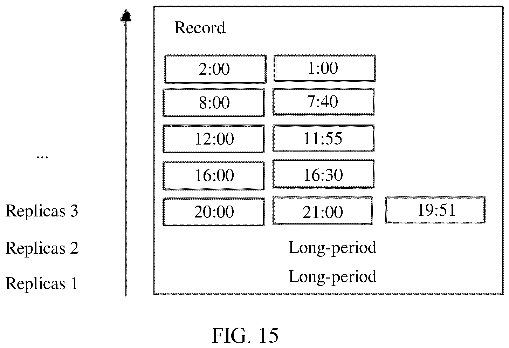

Further, the container management system 10 may calculate a difference between a time of being pushed into the stack and a time of being pulled from the stack, and use the time difference as a life length of a pod replica. As shown in FIG. 15, for a pod replica for which a time of being pushed into a stack and a time of being pulled from the stack are recorded, the container management system 10 may calculate a life length of the pod replica. A pod replica may be scheduled for a plurality of times in an entire historical time period, and the container management system 10 may calculate a plurality of life lengths. For example, life lengths of a third scaled-out pod replica (denoted as replicas 3) in the container management system 10 include 20:00, 21:00, or 19:51.

It should be noted that a pod replica for which a time of being pulled from the stack is not recorded in the stack may be considered as a pod replica with a long life cycle. For example, a first pod replica (denoted as replicas 1) and a second pod replica (denoted as replicas 2) may have long life cycles.

The container management system 10 may predict a life cycle of each pod replica based on a life length of each pod replica according to a statistical policy such as a maximum value, a minimum value, a mean, a quantile (for example, a median or P99), a mean, a probability distribution, or machine learning. For example, when a third pod replica is added to a deployment, if a median is used for prediction, it may be predicted that the pod is to survive for 20 hours; if a maximum value is used, it may be predicted that the pod is to survive for 21 hours.

After obtaining a life cycle of a pod in a deployment, the container management system 10 may determine the life cycle of the at least one node based on the life cycle of the pod on the at least one node and a creation time of the pod on the at least one node. For example, the container management system 10 may calculate remaining survival periods of pods on the at least one node, and determine the life cycle of the node based on the remaining survival periods. Likewise, the container management system 10 may determine the life cycle of the node based on the remaining survival periods according to a statistical policy. Likewise, the statistical policy may include one or more of machine learning, a quantile, a mean, a maximum value, or a probability distribution. In some examples, the container management system 10 may determine a maximum value of the remaining survival periods as the life cycle of the node.

S1204: The container management system 10 determines a target node based on the life cycle of the at least one node and the life cycle of the at least one pod.

In a scale-out phase, the at least one pod is the to-be-deployed pod, and the target node is a node on which the pod is to be deployed. In a scale-in phase, the at least one pod is the deployed pod, and the target node is a node from which the pod is to be deleted. The following separately describes, by using examples, specific implementations of determining a target node in the different phases.

When a pod is to be added, the container management system 10 may determine a degree of similarity between the life cycle of the to-be-deployed pod and the life cycle of the at least one node, and then determine the target node from the at least one node based on the degree of similarity.

The degree of similarity between the lengths of the life cycle of the pod and the life cycle of the node may be determined based on a difference between the life cycles or a ratio of the life cycles. For example, the degree of similarity between the lengths of the life cycle of the pod and the life cycle of the node may be a ratio of the life cycle of the pod to the life cycle of the node, or a reciprocal of the ratio, that is, a ratio of the life cycle of the node to the life cycle of the pod.

In some possible implementations, the container management system 10 may sort the at least one node based on the degree of similarity between the lengths of the life cycle of the pod and the life cycle of the at least one node, and then determine the target node from the at least one node based on a sorting result. For example, the container management system 10 may filter out, based on the sorting result, a node with a degree of similarity less than a preset value, and determine a target node from a remaining node. The target node has sufficient resources to accommodate the to-be-deployed pod.

In some other possible implementations, the container management system 10 may score the at least one node based on the degree of similarity, and determine the target node from the at least one node based on a score of the at least one node. For ease of description, the following uses a first node in the at least one node as an example for description.

It is assumed that the to-be-deployed pod includes a first pod. When a life cycle of the first pod is shorter than a life cycle of the first node, a score of the first node is positively correlated with a first degree of similarity. The first degree of similarity is determined based on a ratio of the life cycle of the first pod to the life cycle of the first node. When a life cycle of the first pod is not shorter than a life cycle of the first node, a score of the first node is positively correlated with a second degree of similarity. The second degree of similarity is determined based on a ratio of the life cycle of the first node to the life cycle of the first container set. In some examples, for the score of the first node, refer to the following formula:

$$\text{score} = \begin{cases} a + b \times \left(\frac{podlife}{nodelife}\right); podlife < nodelife \\ c + d \times \left(\frac{nodelife}{podlife}\right); podlife > nodelife \end{cases} \qquad (2)$$

*a, b, c,* and d are coefficients, score is a score, *podlife* is a life cycle of a pod, and *nodelife* is a life cycle of a node.

A scoring policy is not limited to the foregoing method. Under the premise of ensuring that a pod does not prolong a life cycle of a node, a higher similarity between life cycles indicates a higher score. Under the premise that a pod prolongs a life cycle of a node, more time by which the life cycle is prolonged indicates a lower score.

The container management system 10 may select, as the target node, a node that has a highest score and that has sufficient resources to accommodate the first pod. In some embodiments, the container management system 10 may alternatively select, as the target node, a node that has a score greater than a specified score and that has sufficient resources to accommodate the first pod.

When a pod is to be deleted, the container management system 10 may determine an optimizable fragmented node as a target node based on the life cycle of the at least one node and the life cycle of the pod on the node. Specifically, the container management system 10 may first determine a candidate second node based on the life cycle of the at least one node and the life cycle of the pod on the at least one node.

The candidate second node may be a long-period node, and a pod on the candidate second node is a long-period pod. For example, the long-period pod may remain on the candidate second node in a trough period. A life cycle of a long-period node is longer than a first period, and a life cycle of a long-period pod is longer than a second period. The first period and the second period may be set according to empirical values. In some examples, the first period and the second period may be set to be equal, or be set to be different. A long-period node and a long-period pod are usually not deleted in a trough period of a service. An elastic node and an elastic pod, in contrast to the long-period node and the long-period pod, may be deleted in a trough period of a service.

Then, the container management system 10 determines at least one candidate deletion order of pods on the candidate second nodes, and predicts a benefit of deleting the container sets from the second nodes according to the candidate deletion order. The benefit is determined based on resource utilization on the cluster. The container management system 10 may determine a target deletion order, and determine a target node from the candidate second nodes based on the benefit. For example, the container management system 10 may determine, as the target deletion order, a candidate deletion order that maximizes a benefit, and determine, according to the target deletion order, that a node that can be deleted from the candidate second nodes is the target node.

In consideration that a node that cannot be optimized may exist in the candidate second nodes, the container management system 10 may select some optimizable nodes as target nodes. Specifically, the container management system 10 may sort the candidate second nodes based on a quantity of pods. For example, sorting is performed in ascending order of the quantity of pods. The container management system 10 determines, one by one based on a sorting result, whether the nodes can be optimized, and determines an optimizable node as a target node.

The container management system 10 may predict, based on statistical analysis, a total quantity of long-period pod resources on a node or a quantity of long-period pods in each deployment after a position that is of a second pod on the node and that is in a deletion order is adjusted based on the candidate deletion order. If a quantity of long-period pods in a deployment is greater than a quantity of elastic pods, the node is skipped, and it is determined whether a next node can be optimized. Further, after a node is optimized, if a total quantity of accumulated long-period pod resources exceeds remaining space of the cluster, node filtering may be terminated.

S 1206: The container management system 10 scales the container set on the target node.

In the scale-out phase, the container management system 10 may schedule the to-be-deployed pod (for example, the first pod) to the target node. In the scale-in phase, the container management system 10 may delete the to-be-deleted pod (for example, a second pod) from the target node. In this way, the container management system 10 may scale the pod on the target node.

It should be noted that, in the scale-in phase, the container management system 10 may adjust, according to the target deletion order, a position that is of the second pod on the target node and that is in the deletion order, and then delete the second pod from the target node according to an adjusted position in the deletion order. In this way, when all pods on the target node are deleted, a CA may release the target node, thereby reducing resource waste and reducing service costs.

The container management system 10 may periodically adjust the position of the second pod in the scale-in order, or adjust the position of the second pod in the scale-in order in real time. Periodic optimization means that a life cycle distribution of pods in a cluster is analyzed in a trough period of a service, an optimizable fragmented node is determined as a target node, and a position that is of a second pod on the target node and that is in a deletion order (also referred to as a position in a scale-in order or a scale-in priority) is adjusted. When a next trough period of the service arrives, the target node may be released.

The following separately describes the different adjustment manners in detail with reference to accompanying drawings.

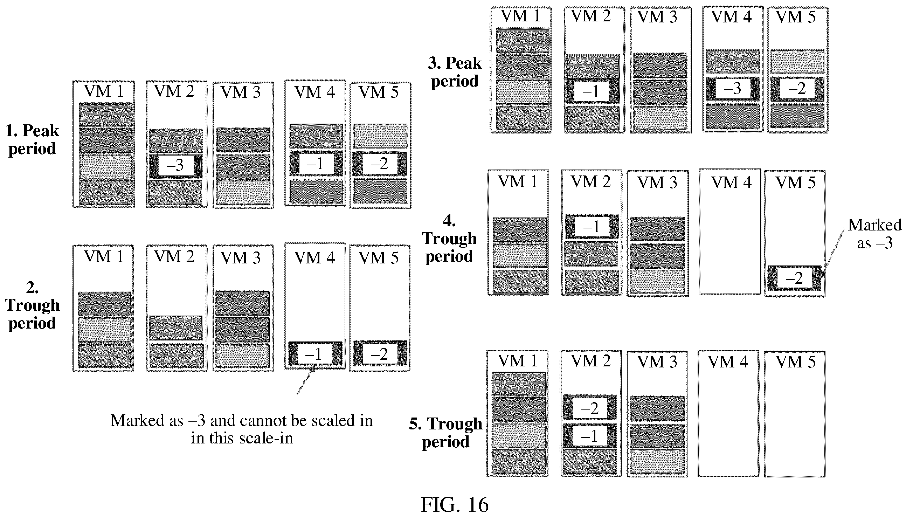

First, refer to a diagram of periodically optimizing a scale-in order shown in FIG. 16. The container management system 10 may analyze a life cycle distribution of pods deployed in a service cluster in a trough period of a service, and select an optimizable fragmented node based on the life cycle distribution.

Specifically, in this example, new pods are added in a peak period of the service. The service has three pods in total, and the three pods are scheduled to a VM 2, a VM 4, and a VM 5, respectively. A scale-in priority of the pod scheduled to the VM 2 is -3, a scale-in priority of the pod scheduled to the VM 4 is -1, and a scale-in priority of the pod scheduled to the VM 5 is -1. In a trough period of the service, the container management system 10 preferentially scales in the pod on the VM 2 based on the scale-in priority. The container management system 10 determines, by analyzing the life cycle distribution of the pods deployed in the service cluster, that the VM 4 is an optimizable fragmented node, and the VM 4 may be determined as a target node. The container management system 10 adjusts a position that is of the pod on the VM 4 and that is in the scale-in order. For example, when a new pod is added to the VM 2 in a next peak period, positions that are of the pod on the VM 4 and the new pod on the VM 2 and that are in the scale-in order are exchanged. In this way, the container management system 10 may first scale in the pod on the VM 4 in a next trough period of the service. When all pods on the VM 4 are deleted, the VM 4 may be released. Further, the container management system 10 may mark the scale-in priority of the pod on the VM 5 as -3 in the foregoing next trough period, so that the pod on the VM 5 is scaled in in a trough period after next. When all pods on the VM 5 are deleted, the VM 5 may be released.

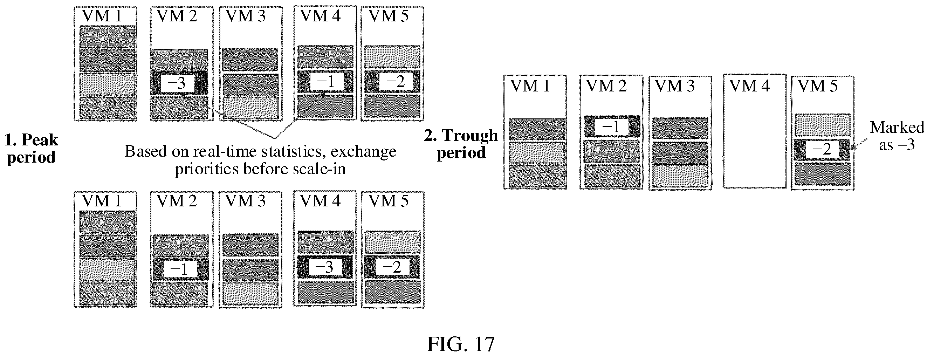

Then, refer to a diagram of optimizing a scale-in order in real time shown in FIG. 17. The container management system 10 may analyze a scale-in order of pods in a service cluster in real time, and determine a scale-in order adjustment policy by using a mathematical optimization method. For example, in a peak period of a service, the container management system 10 may determine that a scale-in order adjustment policy is to exchange positions that are of a pod on a VM 2 and a pod on a VM 4 and that are in the scale-in order. Then, the container management system 10 may adjust, before a trough period of the service arrives, the positions of the pods in the scale-in order (that is, scale-in priorities) according to the scale-in order adjustment policy analyzed in real time. The container management system 10 may perform scale-in according to adjusted positions in the scale-in order in the trough period of the service, so that a node may be smoothly released. Compared with periodic optimization of a scale-in order, the manner of optimizing a scale-in order in real time takes effect more quickly and has a better effect.

Based on the container management method in the foregoing embodiment, this application further provides a container management system. The container management system is configured to manage a container set deployed in a service cluster or a container set to be deployed in the service cluster. As shown in FIG. 8, the container management system 10 includes:

a life cycle profiling module 100, configured to obtain a life cycle of at least one node in the service cluster and a life cycle of at least one container set, where the node is configured to deploy the container set; and

a life cycle scheduling module 200, configured to determine a target node based on the life cycle of the at least one node and the life cycle of the at least one container set, where the target node is a node on which the container set is to be deployed or a node from which the container set is to be deleted; and

the life cycle scheduling module 200 is further configured to scale the container set on the target node.

For example, the life cycle profiling module 100 and the life cycle scheduling module 200 may be implemented by using hardware, or may be implemented by using software. For ease of description, the following uses the life cycle scheduling module 200 as an example for description.

When being implemented by using software, the life cycle scheduling module 200 may be an application program, such as a compute engine, running on a computing device. The application program may be provided for a user in a manner of a virtualization service. The virtualization service may include a virtual machine (virtual machine, VM) service, a bare metal server (bare metal server, BMS) service, and a container (container) service. The VM service may be a service of virtualizing a virtual machine (virtual machine, VM) resource pool on a plurality of physical hosts (for example, computing devices) by using a virtualization technology, to provide a VM for the user on demand. The BMS service is a service of virtualizing a BMS resource pool on a plurality of physical hosts to provide a BMS for the user on demand. The container service is a service of virtualizing a container resource pool on a plurality of physical hosts to provide a container for the user on demand. A VM is a simulated virtual computer, that is, a computer in a logical sense. A BMS is an elastically scalable computing service with high performance, has same computing performance as a conventional physical machine, and has a feature of secure physical isolation. A container is a kernel virtualization technology, which may provide lightweight virtualization to isolate user space, processes, and resources. It should be understood that the VM service, the BMS service, and the container service in the virtualization service are merely used as specific examples. During actual application, the virtualization service may alternatively be another lightweight or heavyweight virtualization service. This is not specifically limited herein.

When being implemented by using hardware, the life cycle scheduling module 200 may include at least one computing device, for example, a server. The life cycle scheduling module 200 may alternatively be a device implemented by using an application-specific integrated circuit (application-specific integrated circuit, ASIC) or implemented by using a programmable logic device (programmable logic device, PLD), or the like. The PLD may be implemented by using a complex programmable logical device (complex programmable logical device, CPLD), a field-programmable gate array (field-programmable gate array, FPGA), a generic array logic (generic array logic, GAL), or any combination thereof.

In some possible implementations, the at least one container set includes the to-be-deployed container set, and the life cycle scheduling module 200 is specifically configured to:

determine a degree of similarity between the life cycle of the to-be-deployed container set and the life cycle of the at least one node; and
determine the target node from the at least one node based on the degree of similarity.

The life cycle scheduling module 200 is specifically configured to:
schedule the to-be-deployed container set to the target node.

In some possible implementations, the life cycle scheduling module 200 is specifically configured to:

sort the at least one node based on the degree of similarity, and determine the target node from the at least one node based on a sorting result; or
score the at least one node based on the degree of similarity, and determine the target node from the at least one node based on a score of the at least one node.

In some possible implementations, the at least one node includes a first node, and the at least one container set includes a first container set.

When a life cycle of the first container set is shorter than a life cycle of the first node, a score of the first node is positively correlated with a first degree of similarity, and the first degree of similarity is determined based on a ratio of the life cycle of the first container set to the life cycle of the first node.

When a life cycle of the first container set is not shorter than a life cycle of the first node, a score of the first node is positively correlated with a second degree of similarity, and the second degree of similarity is determined based on a ratio of the life cycle of the first node to the life cycle of the first container set.

In some possible implementations, the system 10 further includes:
an order optimization module 300, configured to: determine a candidate second node based on the life cycle of the at least one node and the life cycle of the container set on the at least one node; determine at least one candidate deletion order of container sets on the candidate second nodes, and predict a benefit of deleting the container sets from the second nodes according to the candidate deletion order, where the benefit is determined based on resource utilization on the cluster; and determine a target deletion order based on the benefit.

The life cycle scheduling module 200 is specifically configured to:
determine a target node from the candidate second nodes based on the benefit.

The life cycle scheduling module 200 is specifically configured to:
adjust, according to the target deletion order, a position that is of a second container set on the target node and that is in the deletion order, and delete the second container set from the target node according to an adjusted position in the deletion order.

Like the life cycle profiling module 100 and the life cycle scheduling module 200, the order optimization module 300 may be implemented by using hardware, or may be implemented by using software. When being implemented by using software, the order optimization module 300 may be an application program, such as a compute engine, running on a computing device. The application program may be provided for a user in a manner of a virtualization service. When being implemented by using hardware, the order optimization module 300 may include at least one computing device, for example, a server. The order optimization module 300 may alternatively be a device implemented by using an application-specific integrated circuit ASIC or implemented by using a programmable logic device PLD, or the like.

In some possible implementations, the life cycle scheduling module 200 is specifically configured to:

periodically adjust the position of the second container set in the deletion order in a trough period of a service; or before the trough period of the service arrives, adjust the position of the second container set in the deletion order according to a deletion order adjustment policy analyzed in real time.

In some possible implementations, the life cycle profiling module 100 is specifically configured to:

obtain a survival period distribution of replicas in a replica set corresponding to the at least one container set in a historical time period; and predict the life cycle of the at least one container set according to a statistical policy based on the survival period distribution of the replicas in the replica set corresponding to the at least one container set in the historical time period.

In some possible implementations, the life cycle profiling module 100 is specifically configured to: determine the life cycle of the at least one node based on the life cycle of the container set on the at least one node and a creation time of the container set on the at least one node.

In some possible implementations, the container management system 10 is deployed in a scheduler.

In some possible implementations, the container management system 10 is deployed on different devices in a distributed manner, and different modules in the container management system 10 interact by using an application programming interface API server.

In some possible implementations, the order optimization module in the container management system 10 is an independent plug-in, or is obtained by modifying a kernel of a container orchestration platform.

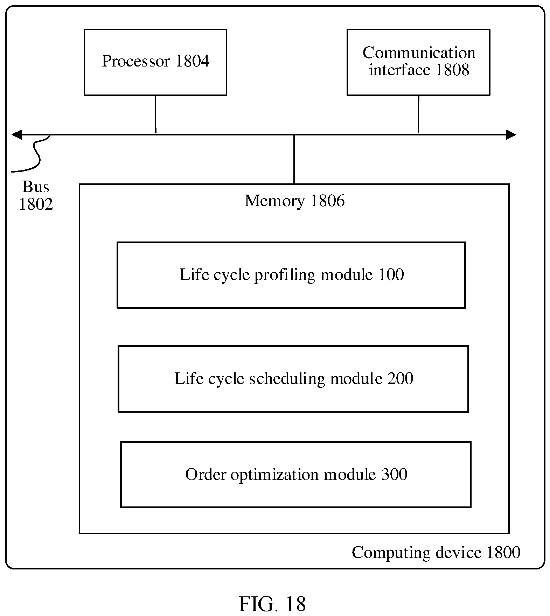

This application further provides a computing device 1800. As shown in FIG. 18, the computing device 1800 includes a bus 1802, a processor 1804, a memory 1806, and a communication interface 1808. The processor 1804, the memory 1806, and the communication interface 1808 communicate with each other by using the bus 1802. The computing device 1800 may be a server or a terminal device. It should be understood that quantities of processors and memories in the computing device 1800 are not limited in this application.

The bus 1802 may be a peripheral component interconnect (peripheral component interconnect, PCI) bus, an extended industry standard architecture (extended industry standard architecture, EISA) bus, or the like. Buses may be classified into address buses, data buses, control buses, and the like. For ease of representation, only one line is used for representation in FIG. 18, but it does not mean that there is only one bus or one type of bus. The bus 1802 may include a path for transmitting information between the components (for example, the memory 1806, the processor 1804, and the communication interface 1808) of the computing device 1800.

The processor 1804 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 1806 may include a volatile memory (volatile memory), for example, a random access memory (random access memory, RAM). The processor 1804 may further include a non-volatile memory (non-volatile memory), for example, a read-only memory (read-only memory, ROM), a flash memory, a hard disk drive (hard disk drive, HDD), or a solid-state drive (solid-state drive, SSD). The memory 1806 stores executable program code, and the processor 1804 executes the executable program code to implement the foregoing container management method. Specifically, the memory 1806 stores instructions used by a container management system 10 to perform the container management method.

The communication interface 1808 uses a transceiver module, for example, but not limited to, a network interface card or a transceiver, to implement communication between the computing device 1800 and another device or a communication network.

An embodiment of this application further provides a computing device cluster. The computing device cluster includes at least one computing device. The computing device may be a server, for example, a central server, an edge server, or an on-premises server in an on-premises data center. In some embodiments, the computing device may alternatively be a terminal device, for example, a desktop computer, a notebook computer, or a smartphone.

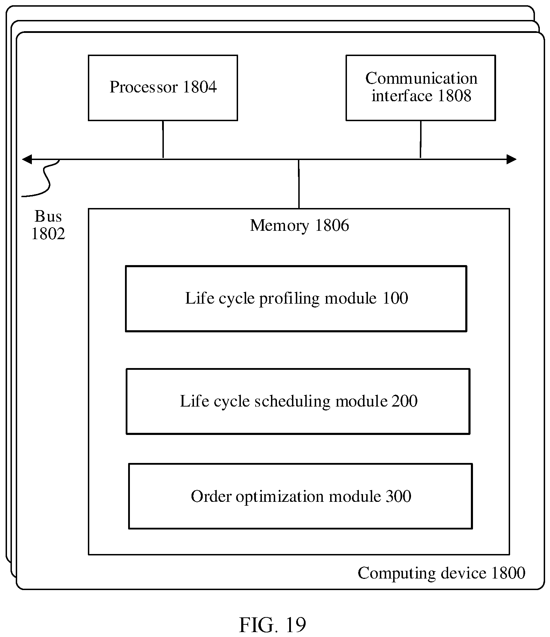

As shown in FIG. 19, the computing device cluster includes at least one computing device 1800. A memory 1806 in one or more computing devices 1800 in the computing device cluster may store same instructions used by a container management system 10 to perform the container management method.

In some possible implementations, the one or more computing devices 1800 in the computing device cluster may further be configured to execute some instructions used by the container management system 10 to perform the container management method. In other words, the one or a combination of the plurality of computing devices 1800 may collectively execute the instructions used by the container management system 10 to perform the container management method.

It should be noted that memories 1806 in different computing devices 1800 in the computing device cluster may store different instructions for performing some functions of the container management system 10.

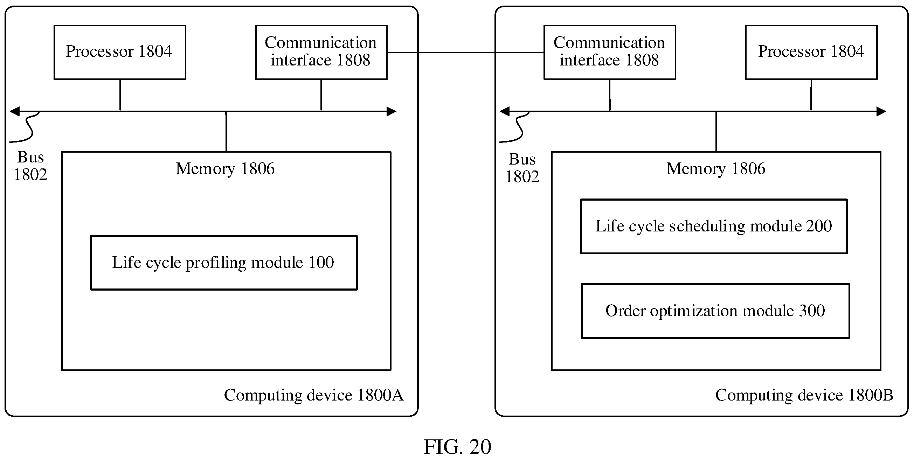

FIG. 20 shows a possible implementation. As shown in FIG. 20, two computing devices 1800A and 1800B are connected through communication interfaces 1808. A memory in the computing device 1800A stores instructions for performing a function of a life cycle profiling module 100. A memory in the computing device 1800B stores instructions for performing a function of a life cycle scheduling module 200. Further, the memory in the computing device 1800B further stores instructions for performing a function of an order optimization module 300. In other words, the memories 1806 of the computing devices 1800A and 1800B collectively store instructions used by the container management system 10 to perform the container management method.

In the manner of the connection between computing device clusters shown in FIG. 20, in consideration that a large amount of computing power is required to determine a deletion order so as to determine a target node in the container management method provided in this application, the function implemented by the order optimization module 300 is also performed by the computing device 1800B.

It should be understood that functions of the computing device 1800A shown in FIG. 20 may alternatively be implemented by a plurality of computing devices 1800. Likewise, functions of the computing device 1800B may alternatively be implemented by a plurality of computing devices 1800.

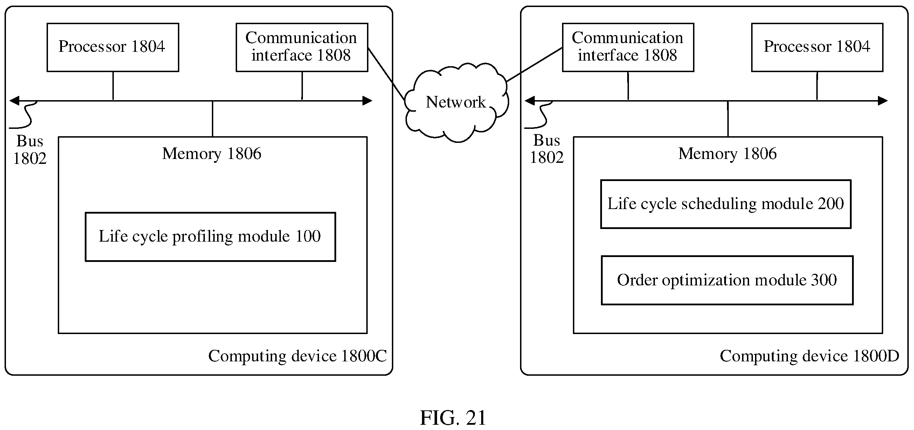

In some possible implementations, the one or more computing devices in the computing device cluster may be connected through a network. The network may be a wide area network, a local area network, or the like. FIG. 21 shows a possible implementation. As shown in FIG. 21, two computing devices 1800C and 1800D are connected through a network. Specifically, each computing device is connected to the network through a communication interface of the computing device. In this possible implementation, a memory 1806 in the computing device 1800C stores instructions for performing a function of a life cycle profiling module 100. In addition, a memory 1806 in the computing device 1800D stores instructions for performing a function of a life cycle scheduling module 200. Further, the memory in the computing device 1800B further stores instructions for performing a function of an order optimization module 300.

In the manner of the connection between computing device clusters shown in FIG. 21, in consideration that a large amount of computing power is required to determine a deletion order so as to determine a target node in the container management method provided in this application, the functions implemented by the life cycle scheduling module 200 and the order optimization module 300 are performed by the computing device 1800D.

It should be understood that functions of the computing device 1800C shown in FIG. 21 may alternatively be implemented by a plurality of computing devices 1800. Likewise, functions of the computing device 1800D may alternatively be implemented by a plurality of computing devices 1800.

An embodiment of this application further provides a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions. The instructions instruct the computing device to perform the container management method performed by the foregoing container management system 10.

An embodiment of this application further provides a computer program product including instructions. The computer program product may be a software or program product that includes instructions and that can run on a computing device or be stored in any usable medium. When the computer program product runs on at least one computing device, the at least one computing device is enabled to perform the foregoing container management method.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the protection scope of the technical solutions of embodiments of the present invention.

## Claims

1. A container management method, applied to a container management system, wherein the container management system is configured to manage a container set deployed in a service cluster or a container set to be deployed in the service cluster, the container set comprises a set of containers, and the method comprises:

   obtaining, by the container management system, a life cycle of at least one node in the service cluster and a life cycle of at least one container set, wherein the node is configured to deploy the container set;
   determining, by the container management system, a target node based on the life cycle of the at least one node and the life cycle of the at least one container set, wherein the target node is a node on which the container set is to be deployed or a node from which the container set is to be deleted; and

scaling, by the container management system, the container set on the target node.

2. The method according to claim 1, wherein the at least one container set comprises the to-be-deployed container set, and the determining, by the container management system, a target node based on the life cycle of the node and the life cycle of the container set comprises:

determining, by the container management system, a degree of similarity between the life cycle of the to-be-deployed container set and the life cycle of the at least one node; and
determining, by the container management system, the target node from the at least one node based on the degree of similarity; and
the scaling, by the container management system, the container set on the target node comprises:
scheduling, by the container management system, the to-be-deployed container set to the target node.

3. The method according to claim 2, wherein the determining, by the container management system, the target node from the at least one node based on the degree of similarity comprises:

sorting, by the container management system, the at least one node based on the degree of similarity, and determining the target node from the at least one node based on a sorting result; or
scoring, by the container management system, the at least one node based on the degree of similarity, and determining the target node from the at least one node based on a score of the at least one node.

4. The method according to claim 3, wherein the at least one node comprises a first node, and the at least one container set comprises a first container set; and

when a life cycle of the first container set is shorter than a life cycle of the first node, a score of the first node is positively correlated with a first degree of similarity, and the first degree of similarity is determined based on a ratio of the life cycle of the first container set to the life cycle of the first node; or
when a life cycle of the first container set is not shorter than a life cycle of the first node, a score of the first node is positively correlated with a second degree of similarity, and the second degree of similarity is determined based on a ratio of the life cycle of the first node to the life cycle of the first container set.

5. The method according to claim 1, wherein the determining, by the container management system, a target node based on the life cycle of the at least one node and the life cycle of the at least one container set comprises:

determining, by the container management system, a candidate second node based on the life cycle of the at least one node and the life cycle of the container set on the at least one node;
determining, by the container management system, at least one candidate deletion order of container sets on the candidate second nodes, and predicting a benefit of deleting the container sets from the second nodes according to the candidate deletion order, wherein the benefit is determined based on resource utilization on the cluster; and
determining, by the container management system, a target deletion order, and determining the target node from the candidate second nodes based on the benefit; and
the scaling, by the container management system, the container set on the target node comprises:
adjusting, by the container management system according to the target deletion order, a position that is of a second container set on the target node and that is in the deletion order, and deleting the second container set from the target node according to an adjusted position in the deletion order.

6. The method according to claim 5, wherein the adjusting, by the container management system, a position that is of a second container set on the target node and that is in the deletion order comprises:

periodically adjusting, by the container management system, the position of the second container set in the deletion order in a trough period of a service; or
before the trough period of the service arrives, adjusting, by the container management system, the position of the second container set in the deletion order according to a deletion order adjustment policy analyzed in real time.

7. The method according to any one of claims 1 to 6, wherein the obtaining, by the container management system, a life cycle of at least one container set comprises:

obtaining, by the container management system, a survival period distribution of replicas in a replica set corresponding to the at least one container set in a historical time period; and

predicting, by the container management system, the life cycle of the at least one container set according to a statistical policy based on the survival period distribution of the replicas in the replica set corresponding to the at least one container set in the historical time period.

8. The method according to any one of claims 1 to 7, wherein the obtaining, by the container management system, a life cycle of at least one node in the service cluster comprises:
determining, by the container management system, the life cycle of the at least one node based on the life cycle of the container set on the at least one node and a creation time of the container set on the at least one node.

9. The method according to any one of claims 1 to 8, wherein the container management system is deployed in a scheduler.

10. The method according to any one of claims 1 to 8, wherein the container management system is deployed on different devices in a distributed manner, and different modules in the container management system interact by using an application programming interface API server.

11. The method according to claim 10, wherein an order optimization module in the container management system is an independent plug-in, or is obtained by modifying a kernel of a container orchestration platform.

12. A container management system, wherein the container management system is configured to manage a container set deployed in a service cluster or a container set to be deployed in the service cluster, the container set comprises a set of containers, and the system comprises:

a life cycle profiling module, configured to obtain a life cycle of at least one node in the service cluster and a life cycle of at least one container set, wherein the node is configured to deploy the container set; and
a life cycle scheduling module, configured to determine a target node based on the life cycle of the at least one node and the life cycle of the at least one container set, wherein the target node is a node on which the container set is to be deployed or a node from which the container set is to be deleted, wherein
the life cycle scheduling module is further configured to scale the container set on the target node.

13. The system according to claim 12, wherein the at least one container set comprises the to-be-deployed container set, and the life cycle scheduling module is specifically configured to:

determine a degree of similarity between the life cycle of the to-be-deployed container set and the life cycle of the at least one node; and
determine the target node from the at least one node based on the degree of similarity; and
the life cycle scheduling module is specifically configured to:
schedule the to-be-deployed container set to the target node.

14. The system according to claim 13, wherein the life cycle scheduling module is specifically configured to:

sort the at least one node based on the degree of similarity, and determine the target node from the at least one node based on a sorting result; or
score the at least one node based on the degree of similarity, and determine the target node from the at least one node based on a score of the at least one node.

15. The system according to claim 14, wherein the at least one node comprises a first node, and the at least one container set comprises a first container set; and

when a life cycle of the first container set is shorter than a life cycle of the first node, a score of the first node is positively correlated with a first degree of similarity, and the first degree of similarity is determined based on a ratio of the life cycle of the first container set to the life cycle of the first node; or
when a life cycle of the first container set is not shorter than a life cycle of the first node, a score of the first node is positively correlated with a second degree of similarity, and the second degree of similarity is determined based on a ratio of the life cycle of the first node to the life cycle of the first container set.

**16.** The system according to claim 12, wherein the system further comprises:

an order optimization module, configured to: determine a candidate second node based on the life cycle of the at least one node and the life cycle of the container set on the at least one node; determine at least one candidate deletion order of container sets on the candidate second nodes, and predict a benefit of deleting the container sets from the second nodes according to the candidate deletion order, wherein the benefit is determined based on resource utilization on the cluster; and determine a target deletion order based on the benefit;
the life cycle scheduling module is specifically configured to:

determine the target node from the candidate second nodes based on the benefit; and
the life cycle scheduling module is specifically configured to:
adjust, according to the target deletion order, a position that is of a second container set on the target node and that is in the deletion order, and delete the second container set from the target node according to an adjusted position in the deletion order.

**17.** The system according to claim 16, wherein the life cycle scheduling module is specifically configured to:

periodically adjust the position of the second container set in the deletion order in a trough period of a service; or before the trough period of the service arrives, adjust the position of the second container set in the deletion order according to a deletion order adjustment policy analyzed in real time.

**18.** The system according to any one of claims 12 to 17, wherein the life cycle profiling module is specifically configured to:

obtain a survival period distribution of replicas in a replica set corresponding to the at least one container set in a historical time period; and
predict the life cycle of the at least one container set according to a statistical policy based on the survival period distribution of the replicas in the replica set corresponding to the at least one container set in the historical time period.

**19.** The system according to any one of claims 12 to 18, wherein the life cycle profiling module is specifically configured to: determine the life cycle of the at least one node based on the life cycle of the container set on the at least one node and a creation time of the container set on the at least one node.

**20.** The system according to any one of claims 12 to 18, wherein the container management system is deployed in a scheduler.

**21.** The system according to any one of claims 12 to 18, wherein the container management system is deployed on different devices in a distributed manner, and different modules in the container management system interact by using an application programming interface API server.

**22.** The system according to claim 21, wherein the order optimization module in the container management system is an independent plug-in, or is obtained by modifying a kernel of a container orchestration platform.

**23.** A computing device cluster, wherein the computing device cluster comprises at least one computing device, the at least one computing device comprises at least one processor and at least one memory, the at least one memory stores computer-readable instructions, and the at least one processor executes the computer-readable instructions, to enable the computing device cluster to perform the method according to any one of claims 1 to 11.

**24.** A computer-readable storage medium, comprising computer-readable instructions, wherein the computer-readable instructions are used for implementing the method according to any one of claims 1 to 11.

**25.** A computer program product, comprising computer-readable instructions, wherein the computer-readable instructions are used for implementing the method according to any one of claims 1 to 11.

Pod 1   Pod 2   ...   Pod N

Replica set/Deployment

Scale

Horizontal pod
autoscaler

FIG. 1

Execution of scaling
Scale-out

Scheduler

Scale-in

Replication
controller

HPA

Pod
auto
scaling

Node
auto
scaling

CA

FIG. 2

FIG. 3

FIG. 4

FIG. 5

FIG. 6

Exchange positions that are of a pod 6 on a VM 1 and a
pod 1 on a VM 4 and that are in a scale-in order

FIG. 7

FIG. 8

FIG. 9

FIG. 10

| Deployment | Deployment | CRD resource |
|---|---|---|
| Pod Pod | Pod Pod | Pod |

| Life cycle profiling module 100 | Kube-apiserver<br>Order optimization module 300 | Scheduler<br>Life cycle scheduling module 200 |
|---|---|---|

| Node | Node |
|---|---|
| Pod Pod Pod | Pod Pod Pod |

FIG. 11

A container management system 10 obtains a life cycle of at least one node in a service cluster and a life cycle of at least one pod — S1202

The container management system 10 determines a target node based on the life cycle of the at least one node and the life cycle of the at least one pod — S1204

The container management system 10 scales the container set on the target node — S1206

FIG. 12

FIG. 13

Deployment

Pod

8:00

Deployment

Pod

Pod

12:00

Deployment

Pod

Pod

Pod

14:00

Deployment

Pod

Pod

16:00

Record stack

Unknown | 8:00

Push 8:00 into the stack

Record stack

Unknown | 12:00

Unknown | 8:00

Push 12:00:00 into the stack

Record stack

Unknown | 14:00

Unknown | 12:00

Unknown | 8:00

Push 14:00:00 into the stack

Record stack

2:00

2:00

Long-period | 12:00

Long-period | 8:00

Pull 14:00 from the stack and update a
life cycle of a third pod to 2 hours

FIG. 14

Record

| | |
|---|---|
| 2:00 | 1:00 |
| 8:00 | 7:40 |
| 12:00 | 11:55 |
| 16:00 | 16:30 |
| 20:00 | 21:00 | 19:51 |

Long-period

Long-period

...

Replicas 3

Replicas 2

Replicas 1

FIG. 15

EP 4 546 135 A1

FIG. 16

FIG. 17

FIG. 18

Processor 1804

Communication interface 1808

Bus 1802

Memory 1806

Life cycle profiling module 100

Life cycle scheduling module 200

Order optimization module 300

Computing device 1800

FIG. 19

FIG. 20

EP 4 546 135 A1

| Processor 1804 | Communication interface 1808 |

Bus 1802

Memory 1806

Life cycle profiling module 100

Computing device 1800C

Network

| Communication interface 1808 | Processor 1804 |

Bus 1802

Memory 1806

Life cycle scheduling module 200

Order optimization module 300

Computing device 1800D

FIG. 21

## INTERNATIONAL SEARCH REPORT

| International application No. |
| --- |
| **PCT/CN2023/081285** |

**A.    CLASSIFICATION OF SUBJECT MATTER**

G06F9/50(2006.01)i

According to International Patent Classification (IPC) or to both national classification and IPC

**B.    FIELDS SEARCHED**

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 容器, 节点, 生命周期, 伸缩, 部署, 删除, pod, node, life cycle, scale, deployment, delete

**C.    DOCUMENTS CONSIDERED TO BE RELEVANT**

| Category* | Citation of document, with indication, where appropriate, of the relevant passages | Relevant to claim No. |
| --- | --- | --- |
| A | CN 112948050 A (XI'AN HUAWEI TECHNOLOGIES CO., LTD.) 11 June 2021 (2021-06-11)<br>      description, paragraphs [0039]-[0125] | 1-25 |
| A | CN 112463290 A (CHINA CONSTRUCTION BANK CORP.) 09 March 2021 (2021-03-09)<br>      entire document | 1-25 |
| A | CN 107688322 A (TIANJIN ZHONGXIN ZHIGUAN INFORMATION TECHNOLOGY CO., LTD.) 13 February 2018 (2018-02-13)<br>      entire document | 1-25 |
| A | CN 112269640 A (INSPUR CLOUD INFORMATION TECHNOLOGY CO., LTD.) 26 January 2021 (2021-01-26)<br>      entire document | 1-25 |
| A | US 2017257432 A1 (CLIQR TECHNOLOGIES INC.) 07 September 2017 (2017-09-07)<br>      entire document | 1-25 |

☐ Further documents are listed in the continuation of Box C.      ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
| --- | --- |
| **11 May 2023** | **16 May 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/081285**

| Patent document cited in search report | | | Publication date (day/month/year) | Patent family member(s) | | | Publication date (day/month/year) |
|---|---|---|---|---|---|---|---|
| CN | 112948050 | A | 11 June 2021 | WO | 2021103646 | A1 | 03 June 2021 |
| | | | | US | 2022283846 | A1 | 08 September 2022 |
| | | | | EP | 4057139 | A1 | 14 September 2022 |
| CN | 112463290 | A | 09 March 2021 | None | | | |
| CN | 107688322 | A | 13 February 2018 | None | | | |
| CN | 112269640 | A | 26 January 2021 | None | | | |
| US | 2017257432 | A1 | 07 September 2017 | None | | | |

Form PCT/ISA/210 (patent family annex) (July 2022)

**REFERENCES CITED IN THE DESCRIPTION**

**Patent documents cited in the description**

- CN 202210983171

- CN 202211507530